# EUROPEAN PATENT SPECIFICATION

(11) **EP 0 294 242 B1**
(45) Date of publication and mention of the grant of the patent: **01.09.1993**
(21) Application number: 88305147.6
(22) Date of filing: 06.06.1988
(51) Int. Cl.: G11B 19/12, G11B 11/10

(54) **Record face identifying device for optical magnetic record medium**
Aufzeichnungträger-Seitenidentifizierungsvorrichtung für optisches magnetisches Aufzeichnungsmedium
Dispositif d'identification de face de support d'enregistrement pour milieu d'enregistrement optique magnétique

(30) Priority: 05.06.1987 JP 142086/87
(43) Date of publication of application: 07.12.1988
(73) Proprietor: SHARP KABUSHIKI KAISHA, Osaka 545 (JP)
(72) Inventor: Fuji, Hiroshi, Tenri-shi Nara-ken (JP); Fujiwara, Tsuneo, Tenri-shi Nara-ken (JP); Numata, Tomiyuki, Tenri-shi Nara-ken (JP); Tsuji, Kentaroh, Nara-shi Nara-ken (JP); Iwaki Takashi, Nara-shi, Nara-ken (JP); Deguchi Toshihisa, Gakuen-daiwa-cho, Nara-shi, Nara-ken (JP)
(74) Representative: Brown, Kenneth Richard

(56) References cited:
- EP-A- 0 156 916
- PATENT ABSTRACTS OF JAPAN vol. 8, no. 245 (P-312)(1682) 10 November 1984, & JP-A-59 119504

## Description

This invention relates to a record face identifying device used to detect an initialized direction of magnetization of an optical magnetic record medium, such as an optical magnetic disk, to identify the record face.

Recording and reproducing systems for optical magnetic disks are briefly explained. The optical magnetic disk is an optical magnetic record medium having a magnetic film on a disk substrate whose easy-axis of magnetization is in the direction perpendicular to the film surface. Then, recording, reproducing or erasing of information is performed by projecting a light beam concentrated into about 1 µm diameter by an objective lens onto the optical magnetic film surface on the disk.

On recording information, a biasing magnetic field whose direction is reverse to an initialized direction of film magnetization is applied to the magnetic disk and a light beam which is intensity-modulated in response to a recorded signal is projected on the film surface. Then, film portions projected by the intense light beam rise partially in temperature and the coercive forces of the portions are reduced. Therefore, the magnetized directions of the portions reverse in the direction of the biasing magnetic field. Thus, magnetic recording corresponding to the intensity modulation of the recording signal can be effected.

On reproducing the record, the light beam is projected on the disk and its reflected beam is detected. The light beam is a linearly polarized laser beam and the polarized direction can be previously known. When such a light beam is projected on the magnetized film, its reflected light beam produces a slant of the plane of polarization corresponding to a magnetized condition by magneto-optic effect (Kerr effect). Therefore, the slant of the plane of polarization of the reflected light beam is detected by an analyzer and its output is transduced into an intensity of light which is detected by a photodetector. This enables the system to reproduce the recorded signal.

In practice, in order to enhance S/N, this reflected light beam is split into P polarized light component and S polarized light component which intersect at right angles. The light intensity of these two components are detected by two photodetectors respectively. Then, taking up a difference of these two outputs from the two photodetectors, the system can reproduce the recorded signal.

As mentioned above the optical magnetic disk subjected to recording or reproducing of information is formed with magnetic films, normally, on both sides of the disk and information can be separately recorded on both sides of the disk, for example, A face and B face. Since the magnetizations of the films on A face and B face are initialized in the same direction, when loading the optical magnetic disk into an optical magnetic disk device, the initialized direction of magnetization viewed from the device side is reverse between A face setting and B face setting.

Therefore, when recording, the initialized direction of magnetization must be recognized and the biasing magnetic field must be applied in the reverse direction with respect to the magnetized direction.

Then, in a conventional optical magnetic disk device, an identification mark for identifying A face and B face is provided on a cartridge case housing the optical magnetic disk. When loading the disk in the device, the initialized direction of magnetization is recognized by detecting mechanically or electrically this mark.

However, provision of such an identification mark on the cartridge case of the optical magnetic disk requires separately a detector only for detecting the identification mark and this leads to increased cost.

Further, since, heretofore, the initialized direction of magnetization has been indirectly detected by using such an identification mark, there was an anxious problem as to whether the indication of the identification mark on the cartridge case conforms with the real initialized direction of magnetization on the disk.

When using an optical magnetic disk having only one side magnetic film, the initialized direction of direction is standardized. Thus, in this case the mark indicating the initialized direction of magnetization on the cartridge case is also necessary. There is therefore the same problem as that encountered in using a double-sided magnetic film disk.

In order to solve the problem, this invention embodies a novel type of record face identifying device for an optical magnetic record medium as follows.

In accordance with the invention there is provided a magneto-optical record signal processing system in which a linearly polarized light beam is projected on a magneto-optical record medium and a recorded signal is reproduced by detecting the reflected light beam from the record medium, said processing system including a device for determining the initialized direction of magnetization of a magneto-optical record medium by detecting a rotation of the polarization plane caused by said magnetization, said device comprising:
an initialized area projecting means which projects a light beam on an initialized area of a magneto-optical record medium not used for information storage;
an optical system which directs the reflected light beam from said initialized area towards detector means; and
means for determining the initialized direction of magnetization of said record medium from the output of said detector means,
characterized in that:
said optical system is an optical differential system which splits the reflected light beam from said initialized area into P-polarized component and S-polarized component whose optical axes intersect at right angles;
said detector means comprises:
two photo-detecting means which detect the respective intensities of said P-polarized component and said S-polarized component of the reflected light beam and convert the light intensities into respective magnitudes of current; and
two current-voltage transducers which convert currents from said photo-detecting means into respective voltages;
and in that:
said means for determining comprises a comparing means which compares an output from one of said current-voltage transducers with an output from the other current-voltage transducer.

The initialized area is an area of the record medium which retains the initialized condition of magnetization even after information has been recorded. The initialized area projecting means may be a control means which moves an optical head onto the initialized area to project a light beam with an optical head drive control device when the optical head is moved, for example, onto a magneto-optical disk in the case of an optical magnetic disk device.

The reflected light beam from the initialized area produces a slant of a polarization plane corresponding to an initialized direction of magnetization. An optical differential system which splits the reflected light beam into two rectangularly polarized components is used to pick up the slants of the polarization planes.

The photo-detecting means includes two photodetectors. The output of the photo-detecting means consists of the outputs of these two photodetectors and the difference between them may be obtained by using a differential amplifier. The output of the photo-detecting means may be compared with a predetermined reference level. When the photo-detecting means is composed of two photodetectors and the differential amplifier is not used, an output of one photodetector is defined as a reference level and an output of another photo-detector may be compared with this reference level by the comparing means. Therefore, the comparing means outputs variant signals corresponding to the initialized direction of magnetization. The output of the comparing means thus obtained is used, for example, for determining the direction of a biasing magnetic field to be applied to the record medium.

This invention enables direct detection of the initialized direction of magnetization of the optical magnetic record medium. Thus, using the record face identifying device of this invention, an operator can use without problems the optical magnetic recording device for both double-sided recording media and one-sided recording media without taking account of the standard of the recording media. Further, in place of separate photo-detecting means and comparing means, those provided for reproducing the recording signal can be used as they are. Therefore, no separate detector and so on are required.

In addition, the initialized area projecting means may comprise the control means which controls the optical head drive device and other control means. Thus, no new mechanical device is required. The record face identifying device for optical magnetic record media of this invention also therefore has the merit of contributing to cost reduction.

The present invention will become more fully understood from the detailed description given hereinbelow and the accompanying drawings, which are given by way of illustration only, and thus are not limitative of the present invention, and wherein:
Fig. 1 is a block diagram showing one identifying device circuit arrangement;
Fig. 2 is a block diagram showing an identifying device circuit arrangement in accordance with the invention using an optical differential system;
Fig. 3 is a graph showing the comparator output;
Fig. 4 is a graph showing the output of the photodetector in the arrangement of Fig. 1;
Fig. 5 (a), (b) are graphs showing the outputs of the photo-detectors using the optical differential system in the arrangement of Fig. 2;
Fig. 6 is a partial longitudinal cross-section view showing an optical magnetic disk in the case of A face reproduction; and
Fig. 7 is a partial longitudinal cross-section view showing an optical magnetic disk in the case of B face reproduction.

A general explanation of a record face identifying device for an optical magnetic disk of an optical magnetic disk device is first given.

This record face identifying device consists of an initialized area beam projecting device and an identifying device.

The initialized area beam projecting device as an initialized area beam projecting means is contained in an optical head drive control device and moves the optical head to the initialized area of the optical magnetic disk to project light beam on it each time the optical magnetic disk is loaded.

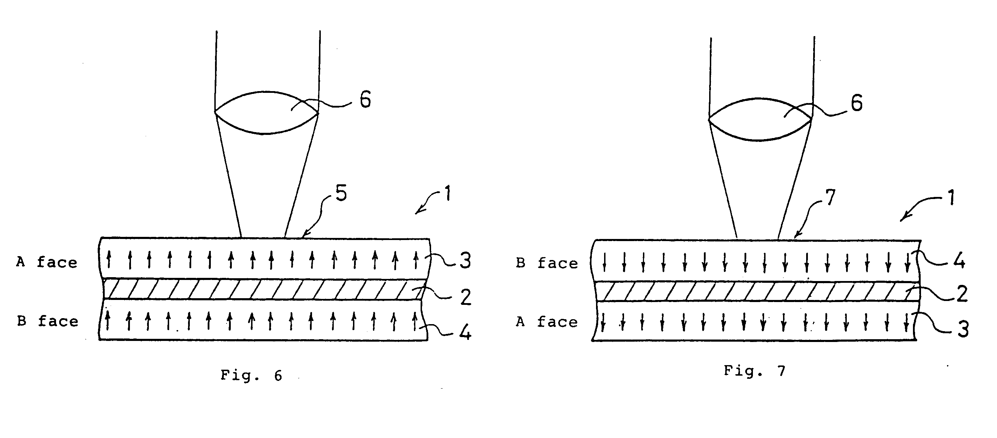

As shown in Figs. 6 and 7, the optical magnetic disk 1 is formed with magnetic films 3, 4 on both sides of the disk with a separation layer 2 therebetween, that is A face and B face. The magnetic films 3, 4 on the faces A and B are initialized so that their magnetizations may be in the same direction, as shown by arrows in Figs. 6 and 7.

When the optical magnetic disk 1 is loaded, with A face setting, into the optical magnetic disk device, the initialized area beam projecting means moves the optical head to the initialized area 5 on the A face to concentrate the light beam on the initialized area 5 with an objective lens 6, as shown in Fig. 6. In this case, a reflected light beam produces a slant of a polarization plane corresponding to the upward-directed magnetization owing to the upward A face.

When the optical magnetic disk 1 is inserted, with B face setting, into the optical magnetic disk device, the initialized area beam projecting means moves the optical head to the initialized area 7 on the B face to concentrate the light beam on the initialized area 7 with the objective lens 6, as shown in Fig. 7. In this case, a reflected light beam produced with, contrary to the case of the A face, a slant of a polarization plane corresponding to the downward-directed magnetization owing to the upward B face.

Each initialized area 5 or 7 is not used for information storage, and is thus kept in the initialized state even when all the recording area of the optical magnetic disk 1 is used to record information. When the light beam is concentrated on the initialized area 5 or 7, its reflected beam is gathered again in the optical head by the objective lens 6.

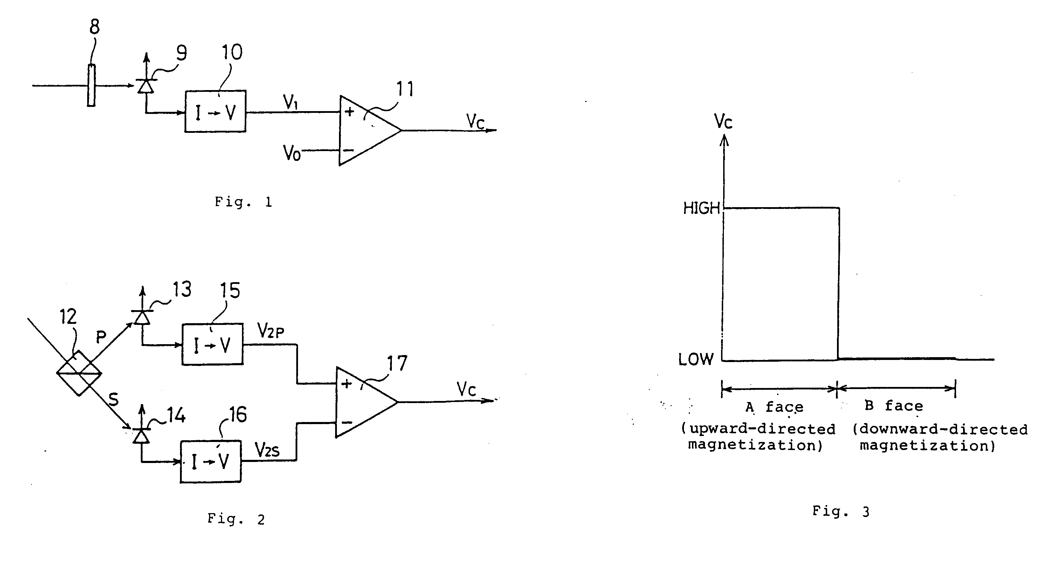

The identifying device utilizes the recording and reproducing elements in the optical head as they are. When an analyzer 8 is used at the transducing means, one photodiode 9 is located behind the analyzer 8 as shown in Fig. 1. The analyzer 8 is an optical system which picks up only one of the polarized components. The photodiode 9 is an element which converts the intensity of the received light into a magnitude of current. The output of the photodiode 9 is connected to a current-voltage transducer 10. The current-voltage transducer 10 is a circuit which transduces a value of an input current into a value of voltage. The output of this current-voltage transducer 10 is connected to a comparing input of a comparator 11.

The comparator 11 is a comparing circuit which accepts a reference voltage Vo at a reference voltage input terminal, and compares a voltage V₁ at the other input terminal with the reference voltage V₀. When the voltage V₁ to be compared exceeds the reference voltage V₀, the comparator 11 outputs a digital signal of "H" and, in other case, a digital signal of "L".

In the identifying device having the above circuit configuration, the reflected light beam from the initialized area 5 or 7 is transmitted to the analyzer 8 and the slant of the polarization plane is transduced into a light intensity. The light intensity transduced by the analyzer 8 is converted into a current magnitude by the photodiode 9 and transmitted to the current-voltage transducer 10.

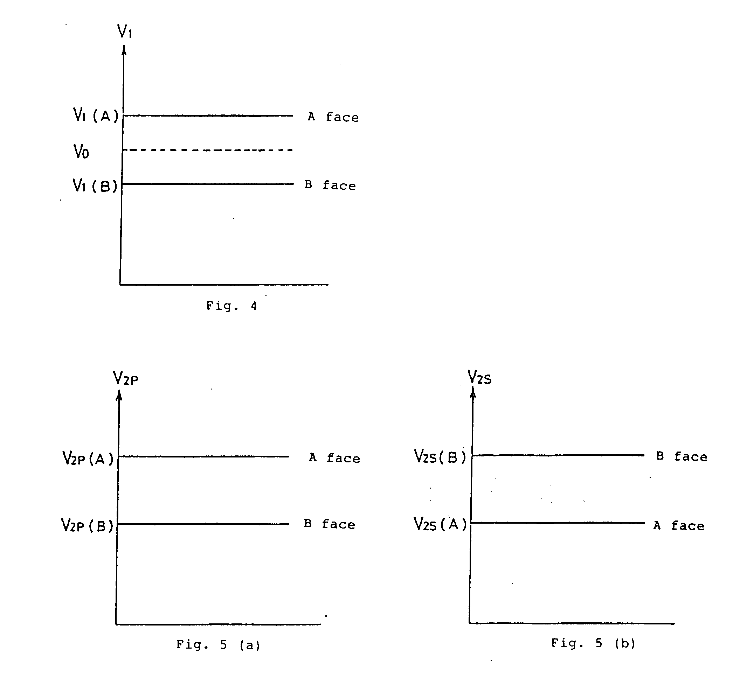

The current-voltage transducer 10 converts a current from the photodiode 9 into a voltage and this voltage, as a comparing voltage V₁, is fed to the comparator 11. Because this comparing voltage V₁ has a voltage value corresponding to the slant of the polarization plane of the reflected light, the voltage V₁ (A) in the case of the A face initialized area 5 (upward-directed magnetization) is higher than the voltage V₁ (B) in the case of the B face initialized area 7 (downward-directed magnetization) as shown in Fig. 4.

The comparator 11 outputs a digital signal representative of the initialized direction of magnetization by comparing this voltage V₁ with the reference voltage V₀. This reference voltage V₀ is set at the middle value between the comparing voltages V₁ (A) and V₁ (B) as shown in Fig. 4. Therefore, the output Vc of the comparator 11 becomes a digital signal of "H" in the case of the upward-directed magnetization and a digital signal of "L" in the case of the downward-directed magnetization as shown in Fig. 3. The output of this comparator 11 is transmitted to a control device not shown, and when "H", it is recognized that the A face of the optical magnetic disk is set, and when "L", it is recognized that the B face is set.

A recording and reproducing apparatus which operates in a like manner to that described above with reference to Fig. 1 is known from EP-A-0,156,916.

In accordance with the invention, an optical differential system 12 is used as the transducing means in the identifying system. Two photo diodes 13, 14 are located on each optical axis split by the optical differential system 12 as shown in Fig. 2. The optical differential system 12 is a system which splits the reflected light beam into P-polarized component and S-polarized component whose optical axes intersect at right angles.

The outputs of the photodiodes 13, 14 are connected to current-voltage transducers 15, 16 respectively. The outputs of the current-voltage transducers 15, 16 are connected to two input terminals of a comparator 17 respectively. The comparator 17 is a circuit which compares output voltage V₂ₛ of the current-voltage transducer 16 with output voltage V₂ₚ of the current-voltage transducer 15, and outputs a digital signal of "H" when the output voltage V₂ₚ exceeds the output voltage V₂ₛ, and outputs a digital signal of "L" in the other case.

The identifying device having the above circuit configuration transmits the reflected light beam from the initialized area 5 or 7 to the optical differential system 12 to split it into the P-polarized component and S-polarized component. When the reflected light beam is split into the polarized components whose optical axes intersect at right angles in this manner, these components are converted into light intensities which vary in reverse directions to each other depending on the slant of the polarization plane.

The P-polarized component and S-polarized component split by the optical differential system 12 are converted into magnitudes of current by the photodiodes 13, 14 respectively and transmitted to the current-voltage transducers 15, 16. The current-voltage transducers 15, 16 convert currents from the photodiodes 13, 14 into voltages, that is, output voltages V₂ₚ, V₂ₛ, and these voltages are inputted into the comparator 17. The voltage V₂ₚ (A) in the case of the A face intialized area 5 (upward-directed magnetization) is higher than the voltage V₂ₚ (B) in the case of the B face initialized area 7 (downward-directed magnetization), as shown in Fig. 5(a). Further, because high and low relation of the output voltage V₂ₛ signal level is reverse as compared with V₂ₚ, the voltage V₂ₛ (B) in the case of the B face initialized area 7 (downward-directed magnetization) is higher than the voltage V₂ₛ (A) in the case of the A face initialized area 5 (upward-directed magnetization), as shown in Fig. 5(b).

The comparator 17 outputs a digital signal representative of the initialized direction of magnetization by comparing this output voltage V₂ₚ with the output voltage V₂ₛ. Therefore, as shown in Fig. 3, the output Vc of the comparator 17 becomes a digital signal of "H" in the case of the A face set in addition to the upward-directed magnetization, or a digital signal of "L" in the case of the B face set and the downward-directed magnetization. Therefore, the same result is obtained as that attained from the identifying device of Fig. 1. Thus, when the slant of the polarization plane is detected, use of such an optical differential system 12 allows the system to obtain a result that is almost not affected by noise.

Further, when such an optical differential system 12 is used, the output voltages V₂ₚ, V₂ₛ from the current-voltage transducers 15, 16 may be inputted into a differential amplifier and an output therefrom may be inputted into the comparing input of the comparator 11 of Fig. 1.

In the embodiment, a record face identifying device for identifying the A face and B face of the optical magnetic disk is explained. However, even if an optical magnetic disk with only one recording face is used, this device can also be applied to identify the initialized direction. In the embodiment, the record face identifying device for optical magnetic disks is described, but this invention can be applied to apparatus which can be used with other optical magnetic recording media such as optical magnetic cards besides the optical magnetic disks.

## Claims

1. A magneto-optical record signal processing system in which a linearly polarized light beam is projected on a magneto-optical record medium and a recorded signal is reproduced by detecting the reflected light beam from the record medium, said processing system including a device for determining the initialized direction of magnetization of a magneto-optical record medium by detecting a rotation of the polarization plane caused by said magnetization, said device comprising:
an initialized area projecting means which projects a light beam on an initialized area of a magneto-optical record medium not used for information storage;
an optical system (12) which directs the reflected light beam from said initialized area towards detector means (13, 14, 15, 16); and
means (17) for determining the initialized direction of magnetization of said record medium from the output of said detector means,
characterized in that:
said optical system is an optical differential system (12) which splits the reflected light beam from said initialized area into P-polarized component and S-polarized component whose optical axes intersect at right angles;
said detector means comprises:
two photo-detecting means (13, 14) which detect the respective intensities of said P-polarized component and said S-polarized component of the reflected light beam and convert the light intensities into respective magnitudes of current; and
two current-voltage transducers (15, 16) which convert currents from said photo-detecting means into respective voltages;
and in that:
said means for determining comprises a comparing means (17) which compares an output from one of said current-voltage transducers with an output from the other current-voltage transducer.

## Patentansprüche

1. Magnetooptisches Aufzeichnungssignalverarbeitungssystem,bei welchem ein linear polarisierter Lichtstrahl auf ein magnetooptisches Aufzeichnungsmedium projiziert und ein aufgezeichnetes Signal durch Feststellen des Lichtstrahls von dem Aufzeichnungsmedium reproduziert wird, wobei dieses Verarbeitungssystem eine Einrichtung für das Bestimmen der initialisierten Magnetisierungsrichtung eines magnetooptischen Aufzeichnungsmediums durch Feststellen der Drehung der Polarisationsebene, die durch die Magnetisierung verursacht wird, beinhaltet und diese Einrichtung umfaßt:
ein Projizierungsmittel für einen initialisierten Bereich, welches einen Lichtstrahl auf einen initialisierten Bereich eines magnetooptischen Aufzeichnungsmediums projiziert, der nicht für die Informationsspeicherung benutzt wird;
ein optisches System (12), welches den reflektierten Lichtstrahl von diesem initialisierten Bereich in Richtung auf Feststellmittel (13, 14, 15, 16) lenkt; und
Mittel (17) für das Bestimmen der initialisierten Magnetisierungsrichtung des Aufzeichnungsmittels aus dem Ausgang aus dem Feststellmittel,
dadurch gekennzeichnet, daß:
dieses optische System ein optisches Differentialsystem (12) ist, welches den reflektierten Lichtstrahl von dem initialisierten Bereich in eine P-polarisierte Komponente und eine S-polarisierte Komponente auftrennt, deren optische Achsen sich rechtwinklig schneiden;
wobei das Feststellmittel umfaßt:
zwei Fotodetektormittel (13, 14), welche die entsprechende Intensität der P-polarisierten Komponente und der S-polarisierten Komponente des reflektierten Lichtstrahls feststellen und die Lichtintensitäten in entsprechende Strombeträge umwandeln; und
zwei Strom-Spannungs-Wandler (15, 16), welche Ströme aus den Fotodetektormitteln in entsprechende Spannungen umwandeln;
und dadurch, daß:
das Mittel für das Feststellen ein Vergleichsmittel (17) umfaßt, welches einen Ausgang aus einem der Strom-Spannungs-Wandler mit einem Ausgang aus dem anderen Strom-Spannungs-Wandler vergleicht.

## Revendications

1. Système de traitement de signal d'enregistrement magnéto-optique dans lequel un faisceau de lumière polarisée de manière linéaire est projeté sur un support d'enregistrement magnéto-optique et un signal enregistré est reproduit en détectant le faisceau de lumière réfléchi en provenance du support d'enregistrement, ledit système de traitement comprenant un dispositif pour déterminer le sens initialisé de magnétisation d'un support d'enregistrement magnéto-optique en détectant une rotation du plan de polarisation causée par ladite magnétisation, ledit dispositif comprenant :
un moyen de projection de zone initialisée qui projette un faisceau de lumière sur une zone initialisée d'un support d'enregistrement magnéto-optique non utilisée pour le stockage d'informations ;
un système optique (12) qui dirige le faisceau de lumière réfléchi en provenance de ladite zone initialisée vers un moyen détecteur (13, 14, 15, 16) ; et
un moyen de détermination (17) du sens initialisé de magnétisation dudit support d'enregistrement à partir de la sortie dudit moyen détecteur,
caractérisé en ce que :
ledit système optique est un système différentiel optique (12) qui partage le faisceau de lumière réfléchi en provenance de ladite zone initialisée en une composante polarisée-P et en une composante polarisée-S dont les axes optiques se coupent à angles droits ;
ledit moyen détecteur comprend :
deux moyens de détection photosensibles (13, 14) qui détectent les intensités respectives desdites composantes polarisée-P et polarisée-S du faisceau de lumière réfléchi et qui convertissent les intensités de lumière en amplitudes respectives de courant ; et
deux transducteurs courant-tension (15, 16) qui convertissent les courants en provenance desdits moyens de détection photosensibles en tensions respectives ;
et en ce que :
ledit moyen de détermination comprend un moyen de comparaison (17) qui compare une sortie en provenance d'un desdits transducteurs courant-tension à une sortie en provenance de l'autre transducteur courant-tension.
